# EUROPÄISCHE PATENTSCHRIFT

(11) **EP 2 421 741 B1**
(45) Veröffentlichungstag und Bekanntmachung des Hinweises auf die Patenterteilung: **16.01.2013**
(21) Anmeldenummer: 10711581.8
(22) Anmeldetag: 27.03.2010
(51) Int. Cl.: B62D 5/00, B62D 3/14

(54) **FAHRZEUG-LENKSYSTEM DER BY-WIRE-BAUART**
VEHICLE STEERING SYSTEM OF DRIVE-BY-WIRE TYPE
SYSTÈME DE DIRECTION DE VÉHICULE DU TYPE À COMMANDE ÉLECTRIQUE

(30) Priorität: 25.04.2009 DE 102009018976
(43) Veröffentlichungstag der Anmeldung: 29.02.2012
(73) Patentinhaber: Bayerische Motoren Werke Aktiengesellschaft, 80809 München (DE)
(72) Erfinder: BOOTZ, Andreas, 80804 München (DE); NITZSCHE, Norbert, 81739 München (DE)
(86) Internationale Anmeldenummer: PCT/EP2010/001944
(87) Internationale Veröffentlichungsnummer: WO 2010/121692

(56) Entgegenhaltungen:
- EP-A2- 1 911 659
- DE-C1- 19 801 393
- DE-U1- 29 915 179

## Beschreibung

Die Erfindung betrifft ein Fahrzeug-Lenksystem nach dem Oberbegriff des einzigen Patenanspruchs. Ein solches ist in der DE 198 01 393 C1 gezeigt. Weiteren Stand der Technik für die vorliegende Erfindung zeigt die EP 1 911 659 A2 in Form eines Fahrzeug-Lenksystems mit hydraulischer Übertragung des Fahrer-Lenkwunsches zu einer Hydraulik-Stelleinheit für die lenkbaren Fahrzeug-Räder, wobei an die besagte hydraulische Übertragung ein Zusatzaktuator angekoppelt ist, mit Hilfe dessen unter Ansteuerung durch eine elektronischen Steuereinheit eine Menge von Hydraulikmedium aus der einen der beiden Hydraulikleitungen der hydraulischen Übertragung abziehbar in die andere der beiden Hydraulikleitungen förderbar ist, so dass über die Hydraulik-Stelleinheit auch ohne entsprechende Lenkrad-Vorgabe durch den Fahrer ein Rad-Lenkwinkel einstellbar ist.

Die Steer-by-Wire-Systeme, bei denen der vom Fahrer eines Fahrzeugs am Lenkrad oder dergleichen (anstelle eines Lenkrads kann auch ein Sidestick oder anderes als Lenkhandhabe vorgesehen sein - im weiteren wird der Einfachheit halber nur von einem Lenkrad sowie bezüglich einer Betätigung desselben von einem Lenkrad-Drehwinkel gesprochen) eingestellte Lenkwunsch den lenkbaren Fahrzeugrädern nicht auf direktem mechanischen Wege, nämlich wie bei den heute üblichen Fahrzeugen über die Lenksäule bzw. Lenkspindel sowie ein daran gekoppeltes Lenkgetriebe (bspw. ein Zahnstangenlenkgetriebe) übermittelt wird, sondern auf elektrischem oder hydraulischem Weg, sind hinsichtlich der Anordnungsmöglichkeiten für die Systembestandteile im Fahrzeug vorteilhaft. Vorteilhafterweise kann mit solchen Steer-by-Wire-Systemen auch unabhängig von einer Vorgabe des Fahrers ein Lenkwinkel an den lenkbaren Rädern eingestellt werden, beispielsweise dahingehend, dass dadurch einem instabilen Fahrzustand entgegen gewirkt wird. Allgemein ausgedrückt besteht bei einem Steer-by-Wire-System kein starrer Zusammenhang zwischen einer am Lenkrad eingestellten Lenk-Vorgabe (= Lenkrad-Drehwinkel) und der aufgrund dieser Lenk-Vorgabe an den lenkbaren Fahrzeug-Rädern ausgeführten Lenkbewegung (= Rad-Lenkwinkel), so dass vorteilhafterweise eine variable Lenkübersetzung zwischen dem Lenkrad-Drehwinkel und dem Rad-Lenkwinkel realisiert sein kann, die beispielsweise auch in Abhängigkeit von der Fahrgeschwindigkeit verändert werden kann.

Da in Steer-by-Wire-Systemen diverse verbaute Sensoren, insbesondere jedoch auch der genannte Aktuator, der angesteuert von Signalen der Lenkradvorgabe die lenkbaren Räder verschwenkt, ausfallen kann bzw. können, ist eine Rückfallebene vorzusehen, welche im Hinblick auf eine erwünschte Bauraum-Flexibilität beispielsweise hydraulisch ausgebildet ist und die im Oberbegriff des Anspruchs 1 hierzu aufgelisteten Merkmale enthalten kann, nämlich eine an das Lenkrad gekoppelte Hydraulik-Fördereinheit sowie eine an das genannte Lenk-Getriebe gekoppelte Hydraulik-Stelleinheit, welche in einer speziellen Ausführungsform selbst das Lenk-Getriebe bilden kann, sowie einen diese beiden Einheiten hydraulisch miteinander verbindenden Hydraulikkreis. Dieser Hydraulikkreis weist zumindest zwei Hydraulikleitungen auf, über welche die Hydraulik-Stelleinheit veranlasst durch die Hydraulik-Fördereinheit die lenkbaren Räder in die eine oder in die andere Richtung zu verschwenken in der Lage ist, weshalb sowohl die Hydraulik-Fördereinheit als auch die Hydraulik-Stelleinheit bspw. ausgehend von einer Mittelstellung oder Nulllage aus zwei einander entgegen gerichtete "Arbeitsrichtungen" aufweisen. Die Hydraulik-Fördereinheit kann jedoch nur dann eine Verschwenkbewegung der lenkbaren Räder über die Hydraulik-Stelleinheit veranlassen, wenn zwischen den beiden Hydraulikleitungen, über welche die Hydraulik-Stelleinheit in die eine oder in die andere Richtung bewegbar ist, kein Kurzschluss besteht. Ein solcher Kurzschluss wird im Stand der Technik über eine Kurzschlussleitung, in der ein einfaches Sperrventil, welches entweder geschlossen oder vollständig geöffnet werden kann, vorgesehen ist, durch Öffnen dieses Sperrventils hergestellt, wenn die hydraulische Rückfallebene nicht wirksam sein soll. In diesem Falle wird bei Betätigung der Hydraulik-Fördereinheit das Hydraulikmedium lediglich von der einen Seite dieser Fördereinheit über die offene Kurzschlussleitung zur anderen Seite dieser Fördereinheit umgewälzt. Hingegen wird oder bleibt dieses Sperrventil, welches im weiteren (sowie im Oberbegriff des Patentanspruchs 1) als Ausgleichsventil bezeichnet wird bzw. ist, geschlossen, wenn die hydraulische Rückfallebene beispielsweise wegen eines Funktionsfehlers des genannten Aktuators oder von dessen Ansteuerung wirksam sein muss.

Weiterhin weisen die bekannten Steer-by-Wire-Systeme einen Lenkmoment-Simulator auf, mit Hilfe dessen an das Lenkrad ein dem vom Fahrer aufgebrachten Lenkmoment entgegen gerichtetes Moment angelegt werden kann, um dem Fahrer ein übliches Lenkgefühl und somit quasi einen haptischen Kontakt zur Fahrbahn zu vermitteln. Im Stand der Technik ist dieser Lenkmoment-Simulator durch einen auf das Lenkrad einwirkenden Elektromotor gebildet, der von einer elektronischen Steuereinheit geeignet angesteuert wird, derart, dass sich in Abhängigkeit von verschiedenen zu berücksichtigen Randbedingungen ein Handmoment bzw. Handkräfte am Lenkrad einstellt bzw. einstellen.

Es wurde erkannt, dass kein solcher eigenständiger Lenkmoment-Simulator benötigt wird, wenn die genannte Hydraulik-Stelleinheit des Lenk-Getriebes über die genannten Hydraulikleitungen stets mit der an das Lenkrad gekoppelten Hydraulik-Fördereinheit vollständig verbunden ist, da dann bei geeigneter Ansteuerung des Aktuators letzterer nur als Lenkkraft-Unterstützung wirkt und die einer Lenkbewegung der Räder entgegen gerichteten Kräfte im übrigen, d.h. unter Abzug der Lenkkraft-Unterstützung, über die Hydraulik-Stelleinheit und die Hydraulik-Fördereinheit zum Lenkrad geleitet werden. Hierdurch wird dem Fahrer abgesehen von der über den besagten Aktuator eingeleiteten Lenkkraft-Unterstützung ein sehr realistisches Lenkgefühl übermittelt.

Allerdings besteht dann, wenn die Hydraulik-Stelleinheit und die Hydraulik-Fördereinheit über die besagten Hydraulikleitungen vollständig miteinander verbunden sind, was gleichbedeutend damit ist, dass das besagte Ausgleichsventil, über welches diese beiden Hydraulikleitungen miteinander verbindbar sind, vollständig oder im wesentlichen vollständig geschlossen ist, so dass praktisch keine Verbindung (oder allenfalls eine äußerst geringe Verbindung) zwischen diesen beiden Hydraulikleitungen vorliegt, mit den im Oberbegriff des Patentanspruchs 1 angegebenen Merkmalen alleine keine Möglichkeit mehr, unabhängig von einer Lenkvorgabe des Fahrers einen Rad-Lenkwinkel einzustellen. Damit fehlte also ein vorteilhafte Eigenschaft eines Lenksystems der by-wire-Bauart.

Zwar könnte jedenfalls theoretisch unabhängig von einer Lenkvorgabe des Fahrers ein Rad-Lenkwinkel eingestellt werden, falls der Aktuator ein solch großes Moment bereit stellen könnte, dass der Fahrer einer daraus resultierenden Drehbewegung des Lenkrads kein entsprechend großes Moment entgegensetzten könnte, jedoch ist dies in der Realität nicht sinnvoll darstellbar. Im übrigen ist es insbesondere für fahrdynamische Regeleingriffe sowie zur Einstellung einer beispielsweise abhängig von der Fahrgeschwindigkeit des Fahrzeugs veränderlichen Lenkübersetzung zwischen dem Lenkrad-Drehwinkel und dem Lenkwinkel der Räder erwünscht, dass eine von der Lenkvorgabe des Fahrers unabhängige Einstellung eines Rad-Lenkwinkels zumindest zunächst für den Fahrer weder ersichtlich noch an seinem Lenkrad spürbar ist.

Vorliegend soll daher aufgezeigt werden, wie ein Fahrzeug-Lenksystem mit den Merkmalen des Oberbegriffs des einzigen Patentanspruchs, wobei das darin enthaltenen Ausgleichsventil im üblichen Betriebszustand im wesentlichen geschlossen ist, wie ein vollwertiges Lenksystem der by-wire-Bauart betrieben werden kann, d.h. es soll eine Maßnahme aufgezeigt werden, mit Hilfe derer an einem Fahrzeug-Lenksystem mit den Merkmalen des Oberbegriffs dieses Anspruchs bei im wesentlichen vollständig geschlossenem Ausgleichsventil unabhängig von einer Lenkvorgabe des Fahrers Rad-Lenkwinkel eingestellt werden können, ohne dass dies für den Fahrer sofort sichtbar oder spürbar ist (= Aufgabe der vorliegenden Erfindung).

Zur Lösung dieser Aufgabe sind die kennzeichnenden Merkmale des einzigen Patentanspruchs vorgeschlagen. Vorzugsweise kann dabei der genannte Zusatzaktuator als Gleichgang-Zylinder-Kolbeneinheit ausgebildet sein, deren Kolben elektromotorisch relativ zum Zylinder verlagerbar ist.

Ein erfindungsgemäßes Lenksystem ist demnach von der by-wire-Bauart, wird jedoch nicht als by-wire-System in Reinform betrieben, sondern mit aktivierter Rückfallebene. Gleichzeitig sind die Elemente des by-wire-Umfangs aktiv. Parallel nebeneinander arbeitet bei Vorliegen eines Lenkwunsches des Fahrers also die genannte Hydraulik-Fördereinheit und der genannte Aktuator zur Umsetzung dieses Lenkwunsches, wobei der Fahrer durch die Hydraulik-Fördereinheit an seinem Lenkrad ein Handmoment grundsätzlich gestellt bekommt und der Aktuator jedenfalls bei vollständig geschlossenem Ausgleichsventil und somit bei vollständig aktivierter Rückfallebene dafür sorgt, dass dieses Handmoment einen gewissen (gewünschten) Betrag annimmt. Es wird somit grundsätzlich über die Rückfallebene entsprechend eines vorgegebenen Lenkrad-Drehwinkels ein Rad-Lenkwinkel eingestellt und es kann gleichzeitig durch geeignete Ansteuerung des Aktuators ein gewünschtes Handmoment am Lenkrad eingestellt werden. Letzterer wird dabei solchermaßen angesteuert, dass sich beim Drehen des Lenkrades durch den Fahrer und Einstellen des Rad-Lenkwinkels durch das Lenk-Getriebe ein hydraulischer Differenzdruck in den beiden genannten Hydraulikleitungen aufbaut, der - hervorgerufen aus dem den lenkbaren Rädern bei ihrem Lenkeinschlag entgegen gesetzten Widerstand und übersetzt durch die Hydraulik-Fördereinheit - zu einem gewünschten Handmoment am Lenkrad führt. Letzteres kann von Randbedingungen abhängig sein, so insbesondere von der Fahrgeschwindigkeit des Fahrzeugs. Soweit ist jedoch bei geschlossenem Lenkventil bis auf Abweichungen, die sich durch die Elastizität der hydraulischen Übertragung zwischen der Hydraulik-Fördereinheit und der Hydraulik-Stelleinheit ergeben, eine feste Zuordnung zwischen dem Lenkrad-Drehwinkel und dem Rad-Lenkwinkel gegeben.

Zusätzlich ist es bei einem erfindungsgemäßen Lenksystem möglich, diese soeben genannte feste Zuordnung zwischen dem Lenkrad-Drehwinkel und dem Rad-Lenkwinkel aufzuheben, so dass eine weitere vorteilhafte Eigenschaft eines steer-by-wire-Systems genutzt werden kann, nämlich dass ein von der Vorgabe des Fahrers abweichender Rad-Lenkwinkel eingestellt werden kann, was bekanntlich beispielsweise zur Stabilisierung eines instabilen Fahrzustands, aber auch zur Veränderung der sog. Lenk-Übersetzung zwischen dem Lenkrad-Drehwinkel und dem Rad-Lenkwinkel, genutzt werden kann. Dies wird bei einem erfindungsgemäßen Lenksystem dadurch ermöglicht, dass innerhalb der genannten hydraulischen Rückfallebene, die durch die Hydraulik-Fördereinheit und die Hydraulik-Stelleinheit sowie die diese beiden Einheiten hydraulisch miteinander verbindenden Hydraulikleitungen gebildet ist, ein weiterer Aktuator als Zusatzaktuator vorgesehen ist. Indem dieser Zusatzaktuator aus einer der beiden Hydraulikleitungen eine Teilmenge von Hydraulikmedium abziehen und in die andere der beiden Hydraulikleitungen einleiten kann, kann mit diesem Zusatzaktuator die an das Lenkgetriebe gekoppelte Hydraulik-Stelleinheit derart beaufschlagt werden, dass an den lenkbaren Rädern des Fahrzeugs ein Lenkwinkel eingestellt wird, ohne dass dies eine Auswirkung auf die an das Lenkrad gekoppelte Hydraulik-Fördereinheit hat, jedenfalls solange das vom Fahrer an das Lenkrad angelegte Handmoment betragsmäßig größer als das einer Lenkbewegung der Fahrzeug-Räder entgegen wirkende Widerstandsmoment ist. Im Verlauf einer solchen durch den Zusatzaktuator veranlassten Verschiebung einer Teilmenge von Hydraulikmedium aus der einen der beiden Hydraulikleitungen in die andere der beiden Hydraulikleitungen bleibt der Druck in diesem Hydrauliksystem bzw. in dieser hydraulischen Rückfallebene im wesentlichen unverändert, so dass der Fahrer von dieser Hydraulik-Verschiebung und der daraus resultierenden Einstellung eines Rad-Lenkwinkels nichts an seinem Lenkrad verspürt. Auch stellt sich hierbei - wie bereits erwähnt - keine Bewegung des Lenkrads ein.

Allerdings kann sich dann, wenn eine durch den Zusatzaktuator initiierte Lenkbewegung der lenkbaren Räder durch diesen Zusatzaktuator nicht wieder rückgängig gemacht wird, ein Schiefstand des Lenkrads bei gerade stehenden Rädern einstellen, d.h. eine Diskrepanz zwischen der Stellung des Lenkrads und dem Rad-Lenkwinkel ergeben, was zu einer Verunsicherung des Fahrers führen kann. Diese Diskrepanz kann mit Hilfe des genannten Ausgleichsventils aufgehoben werden, indem dieses zu geeigneten Zeitpunkten und über eine geeignete Zeitdauer zumindest geringfügig geöffnet wird, so dass dann eine zumindest teilweise Verbindung zwischen den genannten beiden Hydraulikleitungen hergestellt wird. Betätigt bzw. verdreht in diesem Schalt-Zustand des Ausgleichsventils, welches bspw. als Stetigventil ausgebildet sein, alternativ jedoch auch nach Art eines Taktventils arbeiten kann, der Fahrer das Lenkrad, so wird dessen Verdrehbewegung zumindest nicht vollständig auf die lenkbaren Räder übertragen, so dass hiermit die gewünschte bzw. ursprüngliche gegenseitige Positions-Zuordnung zwischen dem Lenkrad und den lenkbaren Rädern wieder hergestellt werden kann.

Die Hydraulik-Fördereinheit und die Hydraulik-Stelleinheit können in Form verschiedener bekannter Bauarten ausgebildet sein, wobei jedoch jeweils eine Verlagerung eines Elements dieser Einheit sowohl in die eine erste als auch in eine zweite hierzu entgegen gesetzte Richtung möglich sein sollte, um ausgehend von einer Mittelposition oder Nulllage sowohl des Lenkrads als auch der lenkbaren Räder jeweils ein Verdrehen oder Verschwenken in beide Richtungen zu ermöglichen. Beispielsweise kann als solche Hydraulik-Stelleinheit ein hydraulischer Reversiermotor zum Einsatz kommen und als Hydraulik-Fördereinheit eine Reversierpumpe. Alternativ können geeignete Kolben-Zylinder-Einheiten insbesondere in Form eines Gleichgang-Zylinders zum Einsatz kommen. Gleiches gilt für den Zusatzaktuator, welcher vorzugsweise von einem Elektromotor betätigt wird, der von einer elektronischen Steuereinheit geeignet angesteuert wird.

Die beigefügte einzige Figur zeigt eine Prinzipdarstellung eines Ausführungsbeispiels der vorliegenden Erfindung.

Mit der Bezugsziffer 1 ist ein vom Fahrer des Fahrzeugs zu betätigendes Lenkrad gekennzeichnet. In die mit diesem verdrehfest verbundene Lenksäule 2 ist ein Drehwinkelsensor 3 integriert, mit dem der vom Fahrer mit seinem Lenkrad 1 vorgegebene Lenkwinkel erfasst werden kann. Gegebenenfalls kann in der Lenksäule 2 zusätzlich ein Drehmomentsensor vorgesehen sein, mit dem das vom Fahrer am Lenkrad 1 vorgegebene Lenkmoment bzw. Handmoment erfasst werden kann, jedoch ist ein solcher nicht zwingend erforderlich.

Am dem Lenkrad 1 gegenüberliegenden Ende der Lenksäule 2 ist eine Hydraulik-Fördereinheit 7 in Form einer Gleichgang-Zylinder-Kolben-Einheit vorgesehen, die bzw. deren Kolben mit einer Drehbewegung des Lenkrads 1 unter Zwischenschaltung eines geeigneten Getriebes - hier in Form eines Spindeltriebs 21 - je nach Drehrichtung ein Hydraulikmedium in eine der beiden von den beiden Enden dieser Hydraulik-Fördereinheit 7 abgehenden und mit den Bezugsziffern 5, 6 gekennzeichnete Hydraulik-Leitungen fördert, wobei aus der jeweils anderen Hydraulikleitung eine entsprechende Menge von Hydraulikmedium in die Hydraulik-Fördereinheit 7 gelangt.

Die beiden lenkbaren Räder 20 (= Vorderräder) des zweispurigen Fahrzeugs sind in grundsätzlich bekannter Weise über Spurhebel und Spurstangen 18 verschwenkbar und somit lenkbar, wobei diese Spurstangen 18 an die beiden Enden eines quer zur Fahrzeuglängsrichtung verlagerbaren Getriebeelements 14 in Form einer Stange eines Lenk-Getriebes 19 angelenkt sind. Dieses Lenk-Getriebe 19 ist nach Art eines dem Fachmann bekannten Zahnstangen-Lenkgetriebes ausgebildet, dessen beidseitig verlängerte Zahnstange das genannte Getriebeelement 14 des Lenk-Getriebes 19 bildet und welche(s) über ein endloses Zugmittelgetriebe 10 mit nachgeschaltetem Kugelgewindetrieb von einem Elektromotor 9 seitlich verlagert werden kann. Dabei bildet dieser Elektromotor 9 zusammen mit dem Zugmittelgetriebe 10 einen Aktuator, für welchen im weiteren ebenfalls die Bezugsziffer 9 verwendet wird. Dieser Aktuator 9 kann mit geeigneter Ansteuerung durch eine elektronische Steuereinheit 17, welche unter anderem die Signale des mit dem Lenkrad 1 verbundenen Drehwinkelsensors 3, welche eine Lenkvorgabe des Fahrers wiedergeben, berücksichtigt, grundsätzlich die entsprechende Verlagerung des Getriebeelements 19 und somit eine gewünschte Lenk- oder Verschwenkbewegung der Räder 20 hervorrufen, jedoch erfolgt dies vorrangig zur Lenkkraftunterstützung. Dabei kann über die Auswertung eines Rotorpositions-Sensors des Aktuators 9 oder mit Hilfe eines nicht gezeigten Wegsensors der elektronischen Steuereinheit 17 die Position des genannten Getriebeelements 14 des Lenk-Getriebes 19 übermittelt werden.

Das besagte Getriebeelement 14 ist weiterhin Bestandteil einer Gleichgang-Kolben-Zylinder-Einheit, die als sog. Hydraulik-Stelleinheit 13 fungiert, wobei das Getriebeelement 14 die beidseitig verlängerte Kolbenstange des Kolbens 13a dieser Hydraulik-Stelleinheit 13 bildet. Beidseitig des Kolbens 13a mündet im Innenraum des Zylinders 13b dieser Hydraulik-Stelleinheit 13 jeweils eine der beiden genannten Hydraulikleitungen 5, 6.

Über eine Kurzschluss-Leitung 23, in welcher ein Ausgleichsventil 25 vorgesehen ist, können die beiden Hydraulik-Leitungen 5, 6 direkt hydraulisch miteinander verbunden werden. Dieses Ausgleichsventil 25 kann beispielswiese als Stetigventil ausgebildet sein und kann daher die Kurzschluss-Leitung 23 entweder vollständig absperren oder teilweise oder vollständig freigeben. Weiterhin ist zwischen den beiden Hydraulikleitungen 5, 6 ein Zusatzaktuator 26 in Form einer Gleichgang-Zylinder-Kolben-Einheit 26a mit zugeordnetem Elektromotor 26b vorgesehen und schließlich noch ein Differenzdrucksensor 27, mit Hilfe dessen der Hydraulik-Differenzdruck zwischen diesen beiden Hydraulikleitungen 5, 6 bestimmt und der elektronischen Steuereinheit 17 mitgeteilt wird.

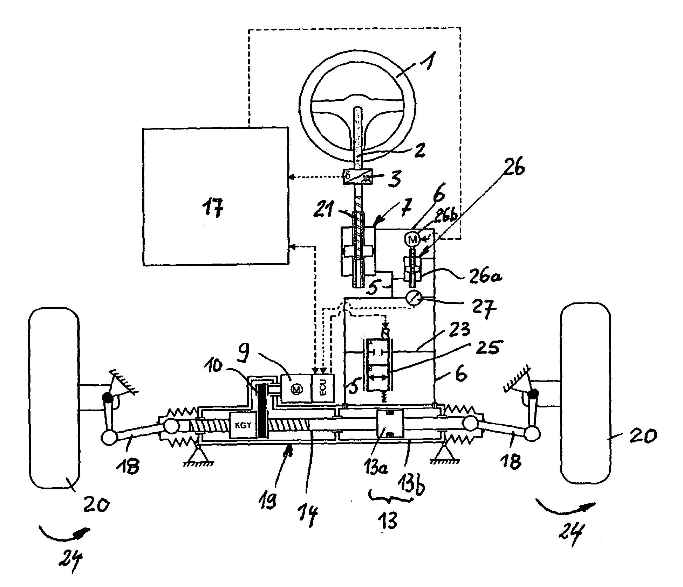

In den meisten Betriebszuständen des erfindungsgemäßen Lenksystems ist das Ausgleichsventil 25 vollständig geschlossen und nimmt somit die figürlich dargestellte Position ein, so dass die Kurzschluss-Leitung 23 vollständig abgesperrt ist und Hydraulikmedium, welches durch eine Lenkrad-Drehbewegung beispielsweise in der Hydraulikleitung 5 von der Hydraulik-Fördereinheit 7 in Richtung der Hydraulik-Stelleinheit 13 verdrängt wird, vollständig in den Zylinder 13b dieser Hydraulik-Stelleinheit 13 gelangt, und zwar in der Figurendarstellung linksseitig von deren Kolben 13a. Wird also durch Verdrehen des Lenkrads 1 der Kolben der Hydraulik-Fördereinheit 7 in der Figurendarstellung nach unten bewegt, so bewirkt das hierdurch aus der unterhalb des besagten Kolbens liegenden Arbeitskammer der Hydraulik-Fördereinheit 7 in die Hydraulikleitung 5 verdrängte Hydraulikmedium über die Hydraulik-Stelleinheit 13 ein Verschwenken der Räder 20 im durch den Pfeil 24 dargestellten Sinn, wobei ein bestimmter Lenkrad-Drehwinkel am Lenkrad 1 einem bestimmten Rad-Lenkwinkel entspricht. Dabei wird aus der in der Figur 1 rechtsseitig des Kolbens 13a liegenden Kammer des Zylinders 13b Hydraulikmedium über die Hydraulikleitung 6 in die Hydraulik-Fördereinheit 7 (zurück) verdrängt, und zwar in die in der Figur 1 oberhalb von deren Kolben liegende Arbeitskammer.

Diese im vorhergehenden Absatz geschilderten Zusammenhänge gelten jedoch nur solange, als der Zusatzaktuator 26 nicht aktiv ist. Wird hingegen zusätzlich zu einer solchen im vorhergehenden Absatz geschilderten Lenkrad-Betätigung durch den Elektromotor 26b des Zusatzaktuators 26 aufgrund entsprechender Ansteuerung durch die elektronische Steuereinheit 17 der Kolben der Gleichgang-KolbenZylindereinheit 26a des Zusatzaktuators 26 beispielsweise ebenfalls um ein gewisses Maß nach unten (in der Figurendarstellung) verlagert, so wird hierdurch zusätzliches Hydraulikmedium über die Hydraulikleitung 5 in die linksseitig des Kolbens 13a liegende Kammer des Zylinders 13b der Hydraulik-Stelleinheit gefördert und gleichzeitig eine entsprechende Menge von Hydraulikmedium aus der rechtsseitig des Kolbens 13a liegenden Kammer des Zylinders 13b in die Hydraulikleitung 6 und aus dieser in die oberhalb des Kolbens der Gleichgang-Kolben-Zylinder-Einheit 26a liegende Kammer abgezogen. Auf diese Weise werden die lenkbaren Räder 20 um ein zusätzliches und somit größeres Maß verschwenkt, als dies mit dem Lenkrad 1 alleine vorgegeben wird. Indem somit der Zusatzaktuator 26 aus einer der beiden Hydraulikleitungen 5, 6 eine Teilmenge von Hydraulikmedium abzieht und in die jeweils andere dieser beiden Hydraulikleitungen 6 bzw. 5 fördert, kann über die Hydraulik-Stelleinheit 13 an den lenkbaren Rädern 20 ein Lenkwinkel unabhängig von einer Betätigung des Lenkrads 1 und somit unabhängig von einer Lenkrad-Vorgabe eingestellt werden. Da hierbei der Druck im Hydrauliksystem im wesentlichen gleich bleibt, verspürt der Fahrer von einer solchen durch den Zusatzaktuator 26 verursachten Lenkwinkel-Überlagerung nichts an seinem Lenkrad. Selbstverständlich kann abweichend von der vorhergehenden Beschreibung auch ein geringerer als mit dem Lenkrad 1 vorgegebener Lenkwinkel an den Rädern 20 eingestellt werden, wenn der Kolben des Zusatzaktuators 26 in der entgegen gesetzten Richtung, nämlich in der Figur nach oben verlagert wird.

Vor der Figuren-Beschreibung des Ausführungsbeispiels wurde bereits erläutert, dass sich mit einer einmaligen Lenkwinkel-Überlagerung zu einem mit dem Lenkrad 1 vorgegebenen Lenkwinkel durch den Zusatzaktautor 26 jedoch ein Schiefstand des Lenkrads 1 bei gerade stehenden, d.h. nicht eingeschlagenen Rädern 20 ergeben wird. Um diesen Schiefstand zu beheben, kann entweder eine gegensinnige Lenkwinkel-Überlagerung durch den Zusatzaktuator 26 durchgeführt werden, oder es kann während einer Verdrehbewegung des Lenkrads 1 das Ausgleichsventil 25 zumindest geringfügig geöffnet werden, was zur Folge hat, dass diese Lenkrad-Drehbewegung dann nicht vollständig in einen Rad-Lenkwinkel umgesetzt wird, da ein Teil des von der Hydraulik-Fördereinheit 7 verdrängten Hydraulikmediums nicht in die Hydraulik-Stelleinheit 13 gelangt, sondern über die Kurzschluss-leitung 23 direkt zur Hydraulik-Fördereinheit 7 zurück geführt wird.

Als besonderer Vorteil eines erfindungsgemäßen Fahrzeug-Lenksystems ist zu nennen, dass der Zusatzaktuator 26 relativ klein bauen kann bzw. klein ausgeführt sein kann, da mit diesem Zusatzaktuator 26 nur relativ kleine (zusätzliche) Lenkwinkel an den lenkbaren Rädern gestellt werden müssen. Aus diesem Grunde ist auch der Leistungsbedarf des Elektromotors 26b des Zusatzaktuators 26, mit Hilfe dessen der Kolben der Gleichgang-Kolben-Zylinder-Einheit 26a des Zusatzaktuators 26 gezielt verlagerbar ist, relativ gering. Im übrigen sei noch darauf hingewiesen, dass durchaus eine Vielzahl von Details abweichend von obigen Erläuterungen gestaltet sein kann, ohne den Inhalt des Patentanspruchs zu verlassen.

## Patentansprüche

1. Fahrzeug-Lenksystem der by-wire-Bauart ohne mechanischem Durchtrieb zwischen einem Lenkrad (1) des Fahrers und einem eine vom Fahrer über das Lenkrad (1) vorgegebene Lenkbewegung zumindest eines lenkbaren Fahrzeug-Rades (20) initiierenden Lenk-Getriebe (19), auf das ein mit Signalen aus der Lenkrad-Vorgabe von einer elektronischen Steuereinheit (17) angesteuerter Aktuator (9, 10) einwirkt, sowie mit einer an dieses Lenk-Getriebe (19) gekoppelten Hydraulik-Stelleinheit (13), die über zwei Hydraulikleitungen (5, 6) mit einer an das Lenkrad (1) gekoppelten Hydraulik-Fördereinheit (7) derart verbindbar ist, dass ein mit dem Lenkrad (1) vorgegebener Lenkrad-Drehwinkel über die Hydraulik-Fördereinheit (7) und die Hydraulik-Stelleinheit (13) in einen entsprechenden Rad-Lenkwinkel umgesetzt wird, wobei diese beiden genannten Hydraulikleitungen (5, 6) zwischen der Hydraulik-Fördereinheit (7) und der Hydraulik-Stelleinheit (13) über ein schaltbares Ausgleichsventil (25) miteinander verbindbar sind,
**dadurch gekennzeichnet, dass** das Ausgleichsventil (25) üblicherweise geschlossen ist und der Aktuator (9, 10) solchermaßen angesteuert wird, dass der Fahrer durch die Hydraulik-Fördereinheit (7) an seinem Lenkrad (1) ein gewünschtes Handmoment gestellt bekommt,
und dass zwischen den beiden genannten Hydraulikleitungen ein Zusatzaktuator (26) vorgesehen ist, mit Hilfe dessen unter Ansteuerung durch die elektronische Steuereinheit (17) eine Menge von Hydraulikmedium aus der einen der beiden Hydraulikleitungen (5, 6) abziehbar und in die andere der beiden Hydraulikleitungen (5 ,6) förderbar ist, so dass über die Hydraulik-Stelleinheit (13) in Zusammenwirken mit dem Aktuator (9, 10) auch ohne entsprechende Lenkrad-Vorgabe ein Rad-Lenkwinkel einstellbar ist,
und wobei im Fall einer Diskrepanz zwischen der Stellung des Lenkrads (1) und dem Rad-Lenkwinkel das Ausgleichsventil (25) über eine geeignete Zeitdauer zumindest geringfügig geöffnet wird, so dass eine Verdrehbewegung des Lenkrads nicht vollständig auf die lenkbaren Räder übertragen wird und
hiermit die gewünschte Positions-Zuordnung zwischen dem Lenkrad und den lenkbaren Rädern wieder hergestellt wird.

## Claims

1. A vehicle steering system of the drive-by-wire type, without mechanical linkage between a steering wheel (1) of the driver and a steering gear (19), which initiates a steering movement of at least one steerable vehicle wheel (20) input by the driver by means of the steering wheel (1) and on which an actuator (9, 10) activated by signals from the steering wheel input from an electronic control unit (17) acts, and with a hydraulic actuating unit (13) coupled to this steering gear (19), said hydraulic actuating unit being connectable by two hydraulic lines (5, 6) to a hydraulic delivery unit (7) coupled to the steering wheel (1) in such a way that a steering wheel angle of rotation input by the steering wheel (1) is converted by means of the hydraulic delivery unit (7) and the hydraulic actuating unit (13) into a corresponding wheel steering angle, these two hydraulic lines (5, 6) mentioned being connectable to one another between the hydraulic delivery unit (7) and the hydraulic actuating unit (13) by means of a switchable compensating valve (25), **characterised in that** the compensating valve (25) is generally closed and the actuator (9, 10) is activated in such a way that the driver is provided with a desired manual torque by the hydraulic delivery unit (7) at his steering wheel (1), and **in that** an auxiliary actuator (26) is provided between the two hydraulic lines mentioned, with the aid of which auxiliary actuator, with activation by the electronic control unit (17), a quantity of hydraulic medium can be removed from one of the two hydraulic lines (5, 6) and delivered to the other of the two hydraulic lines (5, 6), so that a wheel steering angle can be adjusted by the hydraulic actuating unit (13) in cooperation with the actuator (9, 10) even without a corresponding steering wheel input, and wherein if there is a discrepancy between the position of the steering wheel (1) and the wheel steering angle, the compensating valve (25) is at least slightly opened over a suitable time period, so that a turning movement of the steering wheel is not completely transmitted to the steerable wheels and the desired position assignment between the steering wheel and the steerable wheels is thus produced agai

## Revendications

1. Système de direction de véhicule à commande électrique sans passage mécanique entre le volant (1) du conducteur et un mécanisme de direction (19) amorçant un mouvement de braquage prédéfini par le conducteur par l'intermédiaire du volant (1) d'au moins une roue directrice (20) du véhicule, sur lequel agit un actionneur (9, 10) commandé par une unité de commande électronique (17) par des signaux provenant du mouvement prédéfini du volant, comportant une unité de réglage hydraulique (13) accouplée au mécanisme de direction (19), et pouvant être reliée par l'intermédiaire de deux conduites hydrauliques (5, 6) à une installation d'alimentation hydraulique (7) accouplée au volant (1) de sorte qu'un angle de rotation de volant prédéfini par le volant (1), soit connecté par l'intermédiaire de l'unité d'alimentation hydraulique (7) et de l'unité de réglage hydraulique (13) en un angle de braquage de roue correspondant, les deux conduites hydrauliques (5, 6) pouvant être reliées entre l'unité d'alimentation hydraulique (7) et l'unité de réglage hydraulique (13) par l'intermédiaire d'une soupape d'équilibrage commutable (25),
**caractérisé en ce que**
- la soupape d'équilibrage (25) est normalement fermée, et l'actionneur (9, 10) est commandé de sorte que le conducteur puisse disposer sur son volant (1) grâce à l'unité d'alimentation hydraulique (7) d'un couple manuel souhaité,
- entre les deux conduites hydrauliques, il est prévu un actionneur complémentaire (26) à l'aide duquel, suite à une commande par l'unité de commande électronique (17) une quantité de fluide hydraulique puisse être soutirée de l'une des deux conduites hydrauliques (5, 6) et alimentée dans l'autre conduite hydraulique (5, 6) de façon à pouvoir également régler par l'intermédiaire de l'unité de commande hydraulique (13) coopérant avec l'actionneur (9, 10), un angle de braquage sans prédéfinition correspondante, au niveau du volant, et
- en présence d'une contradiction entre la position du volant (1) et l'angle de braquage, la soupape d'équilibrage (25) est ouverte au moins faiblement pendant un lapse de temps adapté de sorte qu'un mouvement de rotation du volant ne soit pas totalement transmis aux roues directrices, et qu'ainsi, la correspondance de position souhaitée entre le volant et les roues directrices soit à nouveau obtenue.
